# EUROPÄISCHE PATENTANMELDUNG

(11) **EP 4 613 826 A1**
(43) Veröffentlichungstag der Anmeldung: **10.09.2025**
(21) Anmeldenummer: 25161245.3
(22) Anmeldetag: 03.03.2025
(51) Int. Cl.: C09J 7/10, C09J 109/02

(54) **HAFTKLEBEMASSE AUF BASIS VON ACRYLNITRIL-BUTADIEN-KAUTSCHUKEN**

(30) Priorität: 05.03.2024 DE 102024106290
(71) Anmelder: TESA SE, 22848 Norderstedt (DE)
(72) Erfinder: DOLLASE, Thilo, 22848 Norderstedt (DE); BOTHA, Carlo, 22848 Norderstedt (DE); BENECKE, Jannik, 22848 Norderstedt (DE)
(74) Vertreter: tesa SE

(57) **Zusammenfassung**

Die Erfindung betrifft eine Haftklebemasse auf Basis von Nitrilkautschuk, ein Selbstklebeband umfassend die Haftklebemasse, sowie deren Verwendung.

Die erfindungsgemäße Haftklebemasse enthält:
(a) eine Nitrilkautschukkomponente; und
(b) eine Klebharzkomponente,

wobei die Nitrilkautschukkomponente (a) zumindest einen ersten Nitrilkautschuk N1 mit einem Acrylnitril-Gehalt von mindestens 14 Gew.-% und höchstens 22 Gew.-% und zumindest einen zweiten Nitrilkautschuk N2 mit einem Acrylnitril-Gehalt von mindestens 25 Gew.-% und höchstens 32 Gew.-% enthält, und der Anteil an Nitrilkautschuken N1 und N2 bezogen auf die Nitrilkautschukkomponente (a) mindestens 90 Gew.-%, beträgt; und
die Klebharzkomponente (b) zumindest ein Klebharz mit aromatischen Strukturelementen mit einem MMAP von höchstens 40 °C und einem Erweichungspunkt von mindestens 85 °C und höchstens 135 °C enthält.

## Beschreibung

Die Erfindung betrifft eine Haftklebemasse auf Basis von Nitrilkautschuk, ein Selbstklebeband umfassend die Haftklebemasse, sowie deren Verwendung.

Haftklebemassen sind seit langem bekannt. Als Haftklebemassen werden Klebemassen bezeichnet, die bereits unter relativ schwachem Andruck eine dauerhafte Verbindung mit dem Haftgrund erlauben und nach Gebrauch im Wesentlichen rückstandsfrei vom Haftgrund wieder abgelöst werden können. Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck und bei Raumtemperatur benetzen. Hierin unterscheiden sie sich von hitzeaktivierbaren Klebemassen, die die ultimative Verbindung zum Haftgrund erst durch Einwirkung von Wärme aufbauen. Die Verklebbarkeit der Haftklebemassen und die Wiederablösbarkeit beruht auf ihren adhäsiven Eigenschaften und auf ihren kohäsiven Eigenschaften. Typischerweise widersprechen sich adhäsive und kohäsive Eigenschaften, so dass üblicherweise die eine Eigenschaft reduziert wird, wenn die andere beispielsweise durch Modifikation der Formulierung erhöht wird. Darüber hinaus werden häufig weitere, zum Teil sehr anwendungsspezifische Anforderungen an Haftklebemassen gestellt.

Klebebänder, die mit Haftklebemassen ausgerüstet sind, so genannte Selbstklebebänder, werden heute im industriellen und privaten Bereich in vielfältiger Weise verwendet. Üblicherweise bestehen Selbstklebebänder aus einer Trägerfolie, die ein- oder beidseitig mit einer Haftklebmasse ausgerüstet ist. Es gibt auch Selbstklebebänder, die ausschließlich aus einer Haftklebmasseschicht und keiner Trägerfolie bestehen, die so genannten Transferklebebänder. Die Zusammensetzung der Selbstklebebänder kann sehr unterschiedlich sein und richtet sich nach den jeweiligen Anforderungen der unterschiedlichen Anwendungen. Die Träger umfassen üblicherweise Kunststofffolien wie zum Beispiel aus Polypropylen, Polyethylen, Polyester oder auch aus Papier, Gewebe oder Vliesstoff.

Als Basis für Haftklebemassen kommen verschiedene Verbindungen in Frage. Die Haftbeziehungsweise Selbstklebemassen umfassen üblicherweise Acrylat-Copolymere, Silikone, Naturkautschuk, Synthesekautschuk, Styrolblockcopolymere oder Polyurethane vielfach in Kombination mit weiteren Mischungsbestandteilen. Acrylnitril-Butadien-Kautschuk basierende Haftklebemassen wurden für Anwendungen vorgeschlagen, bei denen besonders ausgeprägte chemische Widerstandfähigkeit gefordert wird.

Acrylnitril-Butadien-Kautschuke, auch Nitrilkautschuk genannt mit dem Kurzzeichen NBR, abgeleitet von nitrile butadiene rubber, bezeichnet einen Synthesekautschuk, der durch Copolymerisation von Acrylnitril und Buta-1,3-dien in Masseverhältnissen von ungefähr 52:48 bis 10:90 gewonnen wird. Seine Herstellung erfolgt praktisch ausschließlich in wässriger Emulsion. Die dabei resultierenden Emulsionen werden als solche (NBR-Latex) eingesetzt oder zum Festkautschuk aufgearbeitet. Die Eigenschaften des Nitrilkautschuks hängen ab vom Verhältnis der Ausgangsmonomeren und von seiner Molmasse. Die aus Nitrilkautschuk zugänglichen Vulkanisate, d.h. Zubereitungen mit chemisch vernetztem Kautschuk, besitzen hohe Beständigkeit gegenüber Kraftstoffen, Ölen, Fetten und Kohlenwasserstoffen und zeichnen sich gegenüber solchen aus Naturkautschuk durch günstigeres Alterungsverhalten, niedrigeren Abrieb und verminderte Gasdurchlässigkeit aus.

Nitrilkautschuke sind in einer großen Bandbreite verfügbar. Neben dem Acrylnitril-Gehalt erfolgt die Unterscheidung der verschiedenen Typen insbesondere anhand der Viskosität des Kautschuks. Diese wird üblicherweise durch die Mooney-Viskosität angegeben. Diese wiederum wird zum einen durch die Anzahl der Kettenverzweigungen im Polymer und zum anderen durch das Molekulargewicht bestimmt. Prinzipiell unterscheidet man bei der Polymerisation zwischen der sogenannten Kalt- und der Heißpolymerisation. Die Kaltpolymerisation erfolgt üblicherweise bei Temperaturen von 5 bis15 °C und führt im Gegensatz zur Heißpolymerisation, die üblicherweise bei 30 bis 40 °C durchgeführt wird, zu einer geringeren Anzahl von Kettenverzeigungen.

Nitrilkautschuke sind von einer Vielzahl von Herstellern wie zum Beispiel Nitriflex, Zeon, LG Chemicals und Arlanxeo aber auch anderen Firmen kommerziell erhältlich.

Über die Copolymerisate aus Acrylnitril und Butadien hinaus sind weitere, speziellere NBR-Typen wie carboxylierte NBR-Typen kommerziell erhältlich. Diese entstehen durch Terpolymerisation von Acrylnitril und Butadien mit kleinen Anteilen an (Meth)Acrylsäure in Emulsion. Sie zeichnen sich durch hohe Festigkeit aus. Die selektive Hydrierung der C-C-Doppelbindung von NBR führt zu hydrierten Nitrilkautschuken (H-NBR) mit weiter verbesserter Beständigkeit gegen Temperaturerhöhung (bis 150 °C in Heißluft oder Ozon) oder Quellmittel (zum Beispiel schwefelhaltige Rohöle, Brems- beziehungsweise Hydraulikflüssigkeiten). Neben den oben genannten Acrylnitril-Butadien-Kautschuken mit elastomerem Charakter und den carboxylierten oder hydrierten NBR-Kautschuken gibt es auch flüssige NBR-Kautschuke. Diese werden während der Polymerisation durch die Zugabe von Polymerisationsreglern in ihrem Molekulargewicht begrenzt und werden daher als flüssige Kautschuke erhalten.

Für viele Anwendungen ist eine zusätzliche Erhöhung der Kohäsion erforderlich. Zu diesem Zweck können Nitrilkautschuk-Formulierungen chemisch vernetzt werden, was als Vulkanisation bekannt ist. Die Vulkanisation erfolgt mit üblichen Schwefelvernetzern, Peroxiden oder mittels energiereicher Strahlung.

Haftklebemassen auf Basis von Nitrilkautschuk sind bekannt.

Die US 2,601,016 A beschreibt Formulierungen mit einem Acrylnitril-Butadien-Copolymer, einem Klebharz und in vorteilhafter Ausgestaltung einem Weichmacher (Anteil an der Gesamtformulierung 0 bis 50 Gew.-%). Explizit genannt ist ein Nitrilkautschuk mit einem Acrylnitrilanteil von 30 Gew.-% (Hycar OR-25).

Die US 3,374,134 A schlägt Formulierungen mit einem Nitrilkautschuk (Hycar 1022; Acrylnitril-Gehalt 33 %, Mooney-Viskosität 48) und einem Alkylphenol-Harz vor.

Die EP 0 381 349 A2 beschreibt Nitrilkautschuk-haltige Formulierungen. Dabei werden auch Mischungen aus verschiedenen Nitrilkautschuken erwähnt. Explizit aufgeführt ist eine Kombination aus 60 Gew.-% Therban 1707 (hydrierter Nitrilkautschuk, Acrylnitril-Gehalt 34 %) mit 40 Gew.-% Perbunan 3312 (Nitrilkautschuk; Acrylnitril-Gehalt 34 %). Die Beschreibung nennt weitere Nitrilkautschuk-Typen, die im Sinne der EP 0 381 349 A2 einsetzbar sind. Auch wenn der Acrylnitril-Gehalt laut Lehre bei 10 - 45 Gew.-% liegen kann, so weisen die explizit als Beispiel genannten Typen einen Acrylnitril-Gehalt von wenigstens 30 Gew.-% auf. Es ist nicht vorgesehen, die Elastomere mit Klebharzen zu kombinieren.

Die WO 2012/092129 A1 offenbart Formulierungen mit u.a. 30,7 bis 34,0 Gew.-% Nitrilkautschuk, Kohlenwasserstoffharz und zwei verschiedenen Weichmachern. Explizit aufgeführte Materialien sind ein Nitrilkautschuk mit einem Acrylnitril-Gehalt von 33 % und ein aromatisches Kohlenwasserstoffharz mit einem Erweichungspunkt von 80 °C.

Die EP 3 334 797 B1 offenbart Haftklebemassen auf Nitrilkautschukbasis und Klebharzen, wobei der Acrylnitril-Anteil zwischen 10 und 25 Gew.-% liegt und 30 bis 130 phr Klebharze vorliegen. Zwar können mehrere Nitrilkautschuk-Typen kombiniert werden, es werden jedoch keine expliziten Angaben zur Auswahl oder zu Mengenverhältnissen in solchen Kombinationen gemacht.

Die DE 10 2018 222 679 A1 lehrt Haftklebemasseschichten mit Nitrilkautschuk und Klebharz, die mittels Elektronenbestrahlung vernetzt sind. Der Acrylnitril-Gehalt liegt bevorzugt bei mindestens 20 Gew.-%. Vorteilhaft wird ein flüssiger Nitrilkautschuk zugegeben. Mischungen verschiedener elastomerer Nitrilkautschuk-Typen sind nicht explizit genannt.

Die WO 2007/012656 A1 beschreibt hitzeaktivierbare Klebeformulierungen enthaltend eine Mischung aus drei verschieden spezifizierten Nitrilkautschuktypen. Die offenbarten Formulierungen sind für die Verarbeitung durch Heißverpressung konzipiert und bei Raumtemperatur nicht oder zumindest kaum haftklebrig. Eine Sorte der eingesetzten Nitrilkautschuke weist einen Acrylnitril-Gehalt von höchstens 25 Gew.-% auf. Für diese Sorte wird eine bevorzugte Einsatzmenge, bezogen auf die Menge aller Nitrilkautschuke, von maximal 50 Gew.-% beansprucht. In expliziten Beispielen liegt die Einsatzmenge bei 32,0 Gew.-% bzw. 54,5 Gew.-%. Es ist zudem eine zweite Nitrilkautschuksorte mit einem Acrylnitril-Gehalt zwischen 25 Gew.-% und 35 Gew.-% vorhanden mit einem in Beispielen explizitem Anteil von 34 Gew.-% bzw. 27,3 Gew.-%.

Ferner ist gemäß der Beispiele ein dritter Nitrilkautschuk mit einem Acrylnitril-Gehalt von größer oder gleich 35 Gew.-% mit einem Anteil von 18 Gew.-% oder 34 Gew.-% bezogen auf die Gesamtmenge an Nitrilkautschuken enthalten.

Dies führt dazu, dass Formulierungen bei Raumtemperatur keine ausgeprägte Haftklebrigkeit aufweisen, was für die in der WO 2007/012656 A1 beanspruchten Systeme auch nicht erforderlich ist, da sie für die Verklebung in einem Heißverpressprozess vorgesehen sind.

Mit zunehmender Verbreitung von elektronischen Geräten steigen die Anwendungsgebiete derselben. Daraus ergeben sich auch wachsende Anforderungen an die verbauten Komponenten. So wird es durch die Entwicklung von am Körper getragenen elektronischen Geräten (so genannte Wearables) wie etwa Smart-Watches immer wichtiger, dass die dort verwendeten Verklebungen eine hohe Resistenz gegenüber verschiedenen Chemikalien aufweisen und auch nach längerer Lagerung in verschiedenen Medien nicht zu viel Klebkraft verlieren. In solchen Anwendungen haben sich Selbstklebebänder mit Haftklebemassen auf Basis von Nitrilkautschuk bereits als vorzüglich geeignet erwiesen. Ähnliche Anforderungen werden auch vermehrt an andere elektronische Geräte wie Smartphones (Mobiltelefone), Tablets, Notebooks, Kameras, Videokameras, Tastauren, Touchpads und ähnliches gestellt.

Obwohl bereits Selbstklebebänder mit Haftklebemassen auf Basis von Nitrilkautschuk mit sehr guter chemischer Resistenz vorgeschlagen wurden und angeboten werden, besteht stets der Wunsch nach weiter verbesserten klebtechnischen Eigenschaftsprofilen, wobei sich bei der Entwicklung der oben angesprochene Zielkonflikt, gleichzeitig sich widersprechende Eigenschaften nämlich Adhäsion und Kohäsion zu verbessern, als ständige Herausforderung darstellt.

Der vorliegenden Erfindung liegt daher die Aufgabe zugrunde, eine chemisch resistente Haftklebemasse für technische Anwendungen bereitzustellen, die gleichzeitig eine verbesserte Adhäsion und eine verbesserte Kohäsion im Vergleich zu Haftklebemassen aus dem Stand der Technik aufweist.

Gelöst wird diese Aufgabe durch die Haftklebemasse gemäß Anspruch 1.

Demgemäß betrifft die Erfindung eine Haftklebemasse, enthaltend
(a) eine Nitrilkautschukkomponente; und
(b) eine Klebharzkomponente, wobei die

Nitrilkautschukkomponente (a) zumindest einen ersten Nitrilkautschuk N1 mit einem Acrylnitril-Gehalt von mindestens 14 Gew.-% und höchstens 22 Gew.-% und zumindest einen zweiten Nitrilkautschuk N2 mit einem Acrylnitril-Gehalt von mindestens 25 Gew.-% und höchstens 32 Gew.-% enthält, und der Anteil an Nitrilkautschuken N1 und N2 bezogen auf die Nitrilkautschukkomponente (a) mindestens 90 Gew.-%, beträgt;
und die
Klebharzkomponente (b) zumindest ein Klebharz mit aromatischen Strukturelementen mit einem MMAP von höchstens 40 °C (gemäß Test VI) und einem Erweichungspunkt (gemäß Test IV) von mindestens 85 °C und höchstens 135 °C enthält.

Die erfindungsgemäße Haftklebemasse ist damit eine Nitrilkautschuk-basierende Haftklebemasse.

Gegenstand der abhängigen Ansprüche sind vorteilhafte Fortbildungen des Erfindungsgegenstandes. Des Weiteren umfasst die Erfindung ein Selbstklebeband umfassend wenigstens eine erfindungsgemäße Haftklebemasse sowie deren Verwendung.

Sämtliche Ausführungen der Beschreibung gelten für die erfindungsgemäße Haftklebemasse, das erfindungsgemäße Selbstklebeband, das erfindungsgemäße Verfahren zur Herstellung der Haftklebemasse, sowie die Verwendung der erfindungsgemäßen Haftklebemasse oder Selbstklebebandes.

Von der Erfindung sind zudem sämtliche Merkmale, die Gegenstände von jeglichen abhängigen Patentansprüchen sind, umfasst. Ferner sind von der Erfindung Kombinationen einzelner Merkmale miteinander und hierbei auch unterschiedlicher Bevorzugungsstufen umfasst. Somit ist von der Erfindung beispielsweise die Kombination eines ersten als "bevorzugt" gekennzeichneten Merkmals mit einem zweiten als "besonders bevorzugt" gekennzeichneten Merkmals umfasst. Hierbei sind auch im Rahmen von "Ausführungsformen" bezeichnete Gegenstände ebenfalls unterschiedlicher Bevorzugungsstufen mit umfasst.

Das anwendungstechnische Leistungsprofil erfindungsgemäßer Haftklebemassen erfüllt vorzugsweise folgendes Anforderungsprofil:

**Tabelle 1 - Bevorzugtes Leistungsprofil**

| Anforderung | Messmethode | typisch | bevorzugt | sehr bevorzugt |
|---|---|---|---|---|
| Klebkraft Stahl (unvernetzt) | Test II | ≥ 7,0 N/cm | ≥ 10,0 N/cm | ≥ 13,0 N/cm |
| Klebkraft Stahl (vernetzt) | Test II | ≥ 5,0 N/cm | ≥ 7,0 N/cm | ≥ 9,0 N/cm |
| Dynamische Scherfestigkeit (vernetzt) | Test III | ≥ 50,0 N/cm² | ≥ 70,0 N/cm² | ≥ 90,0 N/cm² |
| Chemische Beständigkeit in iso-Propanol/Wasser (unvernetzt) | Test II | ≥ 5,0 N/cm | | |
| Chemische Beständigkeit in iso-Propanol/Wasser (vernetzt) | Test II | ≥ 5,0 N/cm | | |

### (a) Nitrilkautschukkomponente

Die Haftklebemasse enthält (a) eine Nitrilkautschukkomponente, wobei die Nitrilkautschukkomponente (a) zumindest einen ersten Nitrilkautschuk N1 mit einem Acrylnitril-Gehalt von mindestens 14 Gew.-% und höchstens 22 Gew.-% und zumindest einen zweiten Nitrilkautschuk N2 mit einem Acrylnitril-Gehalt von mindestens 25 Gew.-% und höchstens 32 Gew.-% enthält, und der Anteil an Nitrilkautschuken N1 und N2 bezogen auf die Nitrilkautschukkomponente (a) mindestens 90 Gew.-%, beträgt.

Hierbei ist es auch denkbar, dass zwei oder mehr Nitrilkautschuke N1 und/oder zwei oder mehr Nitrilkautschuke N2 enthalten sind.

Die Merkmale, wie die angegebenen Acrylnitril-Gehalte, dieser Kautschuke N1 und N2 beziehen sich in dem Fall auf jeden der enthaltenen Nitrilkautschuke N1 bzw. N2.

Bevorzugt weist ein jeder Nitrilkautschuk N1 einen Acrylnitril-Gehalt von 16 bis 21 Gew.-%, auf.

Bevorzugt weist ein jeder Nitrilkautschuk N2 einen Acrylnitril-Gehalt von 26 Gew.-% bis 30 Gew.-% auf.

Bevorzugt weist ein jeder Nitrilkautschuk N1 einen Acrylnitril-Gehalt von 16 bis 21 Gew.-% und ein jeder Nitrilkautschuk N2 einen Acrylnitril-Gehalt von 26 Gew.-% bis 30 Gew.-% auf.

Bevorzugt weist ein jeder Nitrilkautschuk N1 eine Mooney-Viskosität (ML(1+4) 100 °C) von 45 bis 80 MU auf.

Angaben zur Mooney-Viskosität im Rahmen dieser Offenbarung beziehen sich auf Bestimmungen gemäß ISO 289-1:2015.

Bevorzugt weist ein jeder Nitrilkautschuk N2 eine Mooney-Viskosität (ML(1+4) 100 °C) von 35 bis 65 MU auf.

Bevorzugt weist ein jeder Nitrilkautschuk N1 eine Mooney-Viskosität (ML(1+4) 100 °C) von 45 bis 80 MU und ein jeder Nitrilkautschuk N2 eine Mooney-Viskosität (ML(1+4) 100 °C) von 35 bis 65 MU auf.

Erfindungswesentlich beträgt der Gesamtanteil an Nitrilkautschuken N1 und N2 bezogen auf die Nitrilkautschukkomponente (a) mindestens 90 Gew.-%, um eine Haftklebemasse gemäß der der Erfindung zugrunde liegende Aufgabe bereitzustellen.

Somit enthält die Nitrilkautschukkomponente (a) insbesondere nur bis zu 10 Gew.-% an Nitrilkautschuken mit einem Acrylnitril-Gehalt von mehr als 32 Gew.-%.

Bevorzugt beträgt der Anteil an Nitrilkautschuken N1 und N2 bezogen auf die Nitrilkautschukkomponente (a) mindestens 95 Gew.-%, besonders bevorzugt 100 Gew.-%. Hierdurch wird die der Erfindung zugrunde liegende Aufgabe besonders gut gelöst.

Bevorzugt enthält die erfindungsgemäße Haftklebemasse bezogen auf das Gesamtgewicht der Haftklebemasse, mindestens 38,0 Gew.-% und höchstens 60,0 Gew.-%, bevorzugt mindestens 42,0 Gew.-% und höchstens 55,0 Gew.-% der Nitrilkautschukkomponente (a).

Innerhalb der Nitrilkautschukkomponente (a) sind bevorzugt mindestens 35 Gew.-% und maximal 70 Gew.-%, besonders bevorzugt 40 Gew.-% bis 60 Gew.-%, ganz besonders bevorzugt mindestens 45 Gew.-% und höchstens 55 Gew.-% an Nitrilkautschuken N1 enthalten.

Die Nitrilkautschuke können unabhängig voneinander kalt- oder heißpolymerisiert worden sein.

Während der Polymerisation von Butadien sind verschiedene Monomerverknüpfungsmöglichkeiten gegeben, die je nach Herstellverfahren in unterschiedlichen Anteilen im Polymerisat auftreten.

So unterscheidet man 1,4-cis-, 1,4-trans- und 1,2- (auch Vinyl- genannt) Verknüpfung. Vorteilhaft für Nitrilkautschuke N1 und N2 ist ein Anteil an cis-Verknüpfungen von 8 % bis 50 %, an trans-Verknüpfungen 35 % bis 80 % und Vinyl-Verknüpfungen von 10 % bis 18 %, die sogenannte Mikrostruktur. Die Mikrostruktur kann beispielsweise mittels Kernresonanzspektroskopie (NMR) ermittelt werden.

Erfindungsgemäß besonders vorteilhaft für die Nitrilkautschuke N1 ist ein Anteil an cis-Verknüpfungen von 8 % bis 15 %, an trans-Verknüpfungen 65 % bis 80 % und Vinyl-Verknüpfungen von 10 % bis 18 %. Dies gilt selbstverständlich auch für den Fall, dass nur ein Nitrilkautschuk des Typs N1 enthalten ist.

Somit weist bevorzugt ein jeder Nitrilkautschuk N1 einen Anteil an cis-Verknüpfungen von 8 % bis 15 %, an trans-Verknüpfungen von 65 % bis 80 % und an Vinyl-Verknüpfungen von 10 % bis 18 % auf.

Dies gilt ebenfalls für den oder die Nitrilkautschuke N2.

Bevorzugt weist ein jeder Nitrilkautschuk N2 einen Anteil an cis-Verknüpfungen von 8 % bis 15 %, an trans-Verknüpfungen von 65 % bis 80 % und an Vinyl-Verknüpfungen von 10 % bis 18 % auf.

Bei den einsetzbaren Nitrilkautschuken handelt es sich insbesondere um amorphe Elastomere.

Die Glasübergangstemperatur (ermittelt durch DSC - Dynamische Differenzkalorimetrie (Differential scanning calorimetry)) liegt für Nitrilkautschuke N1 bevorzugt im Bereich zwischen -60 °C (minus sechzig Grad Celsius) und -45 °C (minus fünfundvierzig Grad Celsius) und für Nitrilkautschuke N2 bevorzugt zwischen -40 °C (minus vierzig Grad Celsius) und -25 °C (minus fünfundzwanzig Grad Celsius).

Der Dispersitätsindex Mw/Mn von Nitrilkautschuken liegt typischerweise bei > 10 und < 100. Solche Nitrilkautschuke sind erfindungsgemäß für N1 und N2 einsetzbar. Erfindungsgemäß vorteilhaft wird eine der Nitrilkautschuksorten N1 und N2 so ausgewählt, dass der Dispersitätsindex zwischen 10 und 30 liegt und der Dispersitätsindex der anderen Sorte zwischen 40 und 70 liegt. Es können jedoch auch beide Nitrilkautschuksorten N1 und N2 einen Dispersitätsindex zwischen 10 und 30 oder auch zwischen 40 und 70 aufweisen. Sehr vorteilhaft ist es, wenn der Nitrilkautschuk N1 einen Dispersitätsindex zwischen 10 und 30 aufweist und der Nitrilkautschuk N2 einen Dispersitätsindex zwischen 40 und 70. Der Dispersitätsindex wird mittels GPC (Test la) ermittelt.

### (b) Klebharzkomponente

Die erfindungsgemäße Haftklebemasse enthält weiterhin eine Klebharzkomponente (b), wobei die Klebharzkomponente (b) zumindest ein Klebharz mit aromatischen Strukturelementen mit einem MMAP von höchstens 40 °C (nach Test VI) und einem Erweichungspunkt (nach Test IV) von mindestens 85 °C und höchstens 135 °C enthält.

Die Klebharzkomponente ist insbesondere ein oder mehrere Klebharze.

Das oder die Klebharze sind so ausgewählt, dass sie mit der Nitrilkautschukkomponente (a) der Haftklebemasse mischbar (verträglich, kompatibel) sind.

Die Klebharzkomponente wird insbesondere eingesetzt, um die Adhäsion in gewünschter Weise einzustellen. Unter einem "Klebharz" wird entsprechend dem allgemeinen Verständnis des Fachmanns ein oligomeres oder polymeres Harz verstanden, das die Adhäsion, also die Eigenklebrigkeit der Haftklebemasse im Vergleich zu einer kein Klebharz enthaltenden, ansonsten aber identischen Haftklebemasse erhöht. Klebharze sind spezielle Verbindungen mit im Vergleich zu den Elastomeren niedriger Molmasse, üblicherweise mit einem gewichtsmittleren Molekulargewicht M_{w} von kleiner 5.000 g/mol. Typischerweise beträgt das gewichtsmittlere Molekulargewicht einer im Rahmen der vorliegenden Erfindung verwendeten Klebharzkomponente von 400 bis 5.000 g/mol, bevorzugt von 500 bis 2.000 g/mol, bestimmt durch GPC (Test Ib).

Der Anteil an Klebharzkomponente (b) in der Haftklebemasse wirkt sich positiv auf die Verklebungsfestigkeit aus. Daher sollte der Klebharzanteil nicht zu gering sein. Es hat sich allerdings gezeigt, dass ein zu hoher Anteil an Klebharz(en) einen negativen Einfluss auf die Kohäsion und die Wärmescherfestigkeit haben kann.

Bevorzugt enthält die erfindungsgemäße Haftklebemasse daher, bezogen auf das Gesamtgewicht der Haftklebemasse, 40,0 Gew.-% bis 62,0 Gew.-%, vorzugsweise 40,0 Gew.-% bis 55,0 Gew.-%, der Klebharzkomponente (b).

Erfindungsgemäß enthält die Klebharzkomponente (b) zumindest ein Klebharz mit aromatischen Strukturelementen mit einem MMAP (mixed methylcyclohexane aniline point) von höchstens 40 °C (nach Test VI) und einer Erweichungstemperatur nach der Ring-und-Kugel-Methode von größer 85 °C aber nicht mehr als 135 °C.

Bevorzugt beträgt die Erweichungstemperatur mindestens 95 °C und bevorzugt maximal 115 °C. Die Erweichungstemperatur wird dabei gemäß Test IV wie unten beschrieben bestimmt. Bevorzugt weisen im Fall von mehr als einem Klebharz alle Klebharze in der Klebharzkomponente (b) eine Erweichungstemperatur in den genannten Bereichen auf.

Der MMAP (mixed methylcyclohexane aniline point) beträgt bevorzugt höchstens 25 °C. Der MMAP wird gemäß Test VI wie unten beschrieben bestimmt. Bevorzugt weist das zumindest eine Klebharz der Klebharzkomponente (b) zudem einen DACP (diacetone alcohol cloud point) von höchstens 0 °C, vorzugsweise von höchstens -15 °C, auf. Der DACP wird dabei gemäß Test V, wie unten beschrieben, bestimmt.

Bevorzugt ist das zumindest eine Klebharz der Klebharzkomponente (b) ausgewählt aus der Gruppe bestehend aus Klebharzen mit aromatischen Strukturelementen insbesondere auf Basis von C₉-Monomerströmen, und Polymerisaten reiner C₈- oder C₉-Aromaten, aliphatisch modifizierten aromatischen Kohlenwasserstoffharzen, sogenannten C9/C5-Harzen und sauerstoffhaltigen Klebharzen mit aromatischen Strukturelementen, wie insbesondere Terpenphenolharzen.

Beispiele für solche Klebharze sind Terpenphenolharze insbesondere mit einer OH-Zahl von höchstens 100 mg KOH / g.

Sehr bevorzugt wird zumindest ein Kohlenwasserstoffharz mit aromatischen Strukturelementen eingesetzt.

Besonders bevorzugt ist das zumindest eine Klebharz der Klebharzkomponente (b) ausgewählt aus der Gruppe bestehend aus Klebharzen mit aromatischen Strukturelementen, insbesondere auf Basis von C₉-Monomerströmen, und Polymerisaten reiner C₈- oder C₉-Aromaten, aliphatisch modifizierten aromatischen Kohlenwasserstoffharzen, sogenannten C9/C5-Harzen.

Vorteilhaft ist es, wenn die Klebharzkomponente zu mindestens 50 Gew.-%, oder sogar zu mindestens 70 Gew.-% (jeweils bezogen auf die Klebharzkomponente), insbesondere bevorzugt auch zu 90 bis 100 Gew.-%, zumindest ein Kohlenwasserstoffharz mit aromatischen Strukturelementen enthält.

Kohlenwasserstoffharze mit aromatischen Strukturelementen sind u.a. und beispielsweise von Synthomer unter dem Namen Picco, Raincarbon unter dem Namen Novares oder von Neville unter der Bezeichnung Nevchem oder Cumar erhältlich.

Sauerstoffhaltige Klebharze können innerhalb der Klebharzkomponente (b) zu mehr oder weniger als 50 Gew.-%, bezogen auf die Zusammensetzung der Klebharzkomponente (b), zum Einsatz kommen.

Besonders bevorzugt eingesetzte Terpenphenolharze sind solche, wie sie beispielsweise von der Firma DRT unter dem Handelsnamen Dertophene oder der Firma Kraton unter dem Handelsnamen Sylvares vertrieben werden.

Die Klebharzkomponente kann neben dem zumindest einen zuvor beschriebenen Klebharz auch ein weiteres oder mehrere weitere Klebharze enthalten, die nicht den angegebenen Definitionen hinsichtlich Erweichungstemperatur und/oder DACP- und/oder MMAP-Trübungspunkt entsprechen. So sind auch Klebharze mit einer Erweichungstemperatur unterhalb 85 °C zu einem Anteil in Bezug auf die Zusammensetzung der Klebharzkomponente (b) von bis zu 10 Gew.-% oder sogar bis zu 20 Gew.-% einsetzbar. So sind auch Klebharze mit einer Erweichungstemperatur oberhalb 135 °C wie etwa 140 °C zu einem Anteil in Bezug auf die Zusammensetzung der Klebharzkomponente (b) von bis zu 10 Gew.-% oder sogar bis zu 20 Gew.-% einsetzbar.

Es sind auch sauerstoffhaltige Klebharze mit einem MMAP-Trübungspunkt unterhalb von 40 °C und/oder einem DACP-Trübungspunkt unterhalb von 0 °C mit einem Anteil in Bezug auf die Zusammensetzung der Klebharzkomponente (b) von bis zu 20 Gew.-% oder sogar bis zu 40 Gew.-% einsetzbar. Beispiele für solche Klebharze sind Kolophoniumester, die teilweise hydriert, vollhydriert oder disproportioniert sein können.

Zur Einstellung anwendungsgerechter Eigenschaften können Haftklebemassen durch Zumischen von Weichmachern, Vernetzern oder Füllstoffen modifiziert werden.

Erfindungsgemäße Haftklebemassen enthalten daher optional zudem eine oder mehrere weitere Komponenten ausgewählt aus einer Weichmacherkomponente (c), einer Füllstoffkomponente (d) und einer Additivkomponente (e).

### (c) Weichmacherkomponente

Neben der Nitrilkautschukkomponente (a) und der Klebharzkomponente (b) kann die erfindungsgemäße Haftklebemasse weiterhin eine Weichmacherkomponente (c) enthalten. Die optionale Weichmacherkomponente ist ein oder mehrere Weichmacher. Weichmacher zeichnen sich gegenüber Klebharzen dadurch aus, dass sie eine Glasübergangstemperatur (DSC) von < 25 °C, insbesondere < 0 °C aufweisen.

Der Anteil an Weichmacherkomponente (c), bezogen auf das Gesamtgewicht der Haftklebemasse, beträgt dabei bis 10 Gew.-%, besonders bevorzugt bis 7 Gew.-%, ganz besonders bevorzugt bis 5 Gew.-%, insbesondere falls vorhanden mit einer Mindestmenge von 0,1 Gew.-%.

Vorzugsweise ist der Weichmacher ein flüssiger Nitrilkautschuk. Flüssiger Nitrilkautschuk unterscheidet sich von elastomeren Nitrilkautschuken, die Teile der Nitrilkautschukkomponente sind, durch ihre Viskosität. Für flüssige Nitrilkautschuke ist es unüblich oder sogar unmöglich, eine Mooney-Viskosität zu bestimmen, da diese Rohstoffe bei 100 °C (wenn auch zähflüssig) zu dünnflüssig sind und keinen Elastomercharakter aufweisen. Man gibt stattdessen eher die Schmelzviskosität an, die bei 70 °C erfindungsgemäß vorteilhaft höchstens 30 Pa s, mehr bevorzugt bei höchstens 20 Pa s, oder sogar bei höchstens 10 Pa s, jedoch vorzugsweise bei mindestens 1 Pa s, liegt.

Der Acrylnitril-Gehalt in dem oder den flüssigen Acrylnitril-Butadien-Kautschuk(en) liegt vorteilhaft zwischen 10 und 35 Gew.-%.

Flüssige NBR-Kautschuke werden während der Polymerisation durch die Zugabe von Polymerisationsreglern in ihrem Molekulargewicht begrenzt und werden daher als flüssige Kautschuke erhalten.

Es wird mit dieser Bevorzugung jedoch nicht ausgeschlossen, dass auch Weichmacher anderer Chemie wie beispielsweise Ester genutzt werden können.

### (d) Füllstoffkomponente

Füllstoffe werden beispielsweise zur Steigerung der Kohäsion einer Haftklebemasse eingesetzt. Dabei führt häufig eine Kombination aus Füllstoff/Füllstoff-Wechselwirkungen und Füllstoff/Polymer-Wechselwirkungen zu der gewünschten Verstärkung der Polymermatrix.

Füllstoffe werden auch zur Gewichts- beziehungsweise Volumenerhöhung in Papier, zu Kunststoffen sowie zu Kleb- und Anstrichstoffen und zu anderen Produkten beigemischt. Die Füllstoffzugabe verbessert oftmals die technische Verwendbarkeit der Produkte und hat Einfluss auf deren Qualität, zum Beispiel Festigkeit, Härte usw. Die natürlichen, anorganischen und organischen Füllstoffe wie Calciumcarbonat, Kaolin, Dolomit und dergleichen werden mechanisch hergestellt.

Die Haftklebemasse enthält optional einen oder mehrere Füllstoffe, wobei diese insbesondere darin unterschieden werden können, dass sie verstärkend oder nicht verstärkend sein können. Vor allem zu nennen sind hier Siliziumdioxide (sphärisch, nadelförmig oder unregelmäßig wie die pyrogenen Silicas), Schichtsilikate, Calciumcarbonate, Zinkoxide, Titandioxide, Aluminiumoxide oder Aluminiumoxidhydroxide. Füllstoffe dieser Art werden bevorzugt zu höchstens 10,0 Gew.-% bezogen auf das Gesamtgewicht der Haftklebemasse eingesetzt.

Sehr bevorzugt werden Füllstoffe organischer Natur eingesetzt. Insbesondere hervorzuheben sind in diesem Zusammenhang elastomere oder viskoelastische Füllstoffe, da sie einen positiven Einfluss auf die Kohäsion haben. Als sehr vorteilhaft haben sich Polyurethan-basierende Füllstoffe, sogenannte Polyurethan-Beads (Polyurethanperlen) erwiesen. Unter einem Bead wird ein weitestgehend kugelförmiger Partikel verstanden. Besonders bevorzugt werden aliphatische Polyurethan-Beads eingesetzt, die auch mit anderen Polymeren kombiniert sein können. Insbesondere solche mit einer Glasübergangstemperatur (DSC) von höchstens -20 °C sind vorteilhaft. In einer Ausführungsform weisen die Beads eine mittlere Teilchengröße d(50) von 1 bis 80 µm, bevorzugt 1 bis 30 µm, stärker bevorzugt 1 bis 25 oder 10 bis 30 µm oder 10 bis 20 µm, auf, gemessen mittels DIN 66111:1989-02 oder Laserbeugung nach ISO 13320:2020-01. In einer Ausführungsform weisen die Beads, insbesondere Polyurethan-Beads, eine Schüttdichte von 300 bis 800 g/L, bevorzugt 500 bis 800 g/L auf, gemessen mittels DIN EN 1097 -3: 1998-06. Geeignete Polyurethan basierte Füllstoffe sind beispielsweise kommerziell erhältlich von der Firma Lamberti S.p.A. unter den Handelsnamen Decosphaera^{®}, insbesondere Decosphaera^{®}15F. Ebenfalls sehr gut geeignet sind Polymer Beads (Polymerperlen) der Fa. Sunjin Beauty Science wie insbesondere EPU 40, welche aus vernetztem HDI (Hexamethylendiisocyanat) / Trimethylol Hexyllacton Polymer und Polymethyl-methacrylat bestehen.

Auch diese Füllstoffe werden bevorzugt zu höchstens 10,0 Gew.-% eingesetzt. Sehr vorteilhaft ist ein Einsatzbereich zwischen 2,0 Gew.-% und 8,0 Gew.-% bezogen auf das Gesamtgewicht der Haftklebemasse.

Gemäß bevorzugter Ausführungsformen enthält die erfindungsgemäße Haftklebemasse einen oder mehrere Füllstoffe, bevorzugt organische elastomere oder viskoelastische Füllstoffe, besonders bevorzugt Polyurethanperlen und/oder Polymerperlen aus vernetztem HDI (Hexamethylendiisocyanat) / Trimethylol Hexyllacton Polymer und Polymethyl-methacrylat.

### (e) Additivkomponente

Um das Eigenschaftsprofil der erfindungsgemäßen Haftklebemasse weiter anzupassen, können der Haftklebemasse weitere Zuschlagstoffe beigefügt werden. Dabei handelt es sich vorzugsweise um solche, die ausgewählt sind aus der Gruppe bestehend aus primären Antioxidantien wie sterisch gehinderten Phenolen, sekundären Antioxidantien wie Phosphite oder Thioether, Prozessstabilisatoren wie C-Radikalfänger, Lichtschutzmitteln wie UV-Absorber oder sterisch gehinderten Aminen, Verarbeitungshilfsmitteln, Vernetzer, auch in Kombination mit Beschleunigern, Vernetzungspromotoren und weiteren Elastomeren wie solche auf Basis reiner Kohlenwasserstoffe wie ungesättigte Polydiene, natürliche oder synthetisch erzeugte Polyisoprene oder Polybutadiene und funktionalisierte Kohlenwasserstoffe wie halogenhaltige, acrylathaltige oder vinyletherhaltige Polyolefine. Des Weiteren können Farbstoffe und Farbpigmente.

Die Haftklebemasse kann entsprechend schwarz, grau, weiß oder farbig sein.

Erfindungsgemäß sollten die Anteile sämtlicher zugesetzter Additive wie weitere Elastomere und/oder Farbstoffe und/oder Alterungsschutzmittel in der Summe vorzugsweise 10,0 Gew.-%, besonders bevorzugt 5,0 Gew.-% bezogen auf das Gesamtgewicht der Haftklebemasse nicht übertreffen.

Die aufgezählten Stoffe der Additivkomponente (e) sind nicht zwingend. Die erfindungsgemäße Haftklebemasse funktioniert auch, ohne dass diese einzeln oder in beliebiger Kombination zugesetzt sind, also ohne weitere Elastomere und/oder Farbstoffe und/oder Alterungsschutzmittel.

### Schäumung

Die erfindungsgemäße Haftklebemasse kann zudem schäumbar gestaltet sein und entsprechende Haftklebemasseschichten in Selbstklebebändern entsprechend geschäumt vorliegen. Hierzu kann der Haftklebemasse zumindest eine Sorte eines geeigneten Schäumungsmittels zugesetzt sein.

Die erfindungsgemäße Haftklebemasse ist gemäß bevorzugter Ausführungsformen geschäumt.

Vorteile der Schäumung zeigen sich in einigen Anwendungen, in denen Gewichtsreduktion gewünscht ist, in anderen in denen eine gesteigerte Schockresistenz erforderlich ist wie insbesondere bei mobilen Elektronikgeräten.

Die Schäumung erfolgt bevorzugt durch das Einbringen und nachfolgende Expandieren von Mikroballons.

Unter "Mikroballons" werden elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, Polyvinylidenchlorid, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 µm Durchmesser im unexpandierten Zustand) und ihre zur Expansion benötigten Starttemperaturen (75 bis 220 °C) differenzieren. Ein Beispiel für kommerziell erhältliche Mikroballons sind die Expancel^{®} DU-Typen (DU = dry unexpanded) von der Firma Nouryon.

Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylvinylacetat mit einer Mikroballonkonzentration von ca. 65 Gew.-%. Sowohl die Mikroballon-Dispersionen als auch die Masterbatche sind wie die DU-Typen zur Herstellung einer geschäumten erfindungsgemäßen Haftklebemasse geeignet.

Eine geschäumte erfindungsgemäße Haftklebemasse kann auch mit sogenannten vorexpandierten Mikroballons erzeugt werden. Bei dieser Gruppe findet die Expansion schon vor der Einmischung in die Polymermatrix statt. Vorexpandierte Mikroballons sind beispielsweise unter der Bezeichnung Dualite^{®} oder mit der Typenbezeichnung Expancel xxx DE (Dry Expanded) von der Firma Nouryon kommerziell erhältlich.

Erfindungsgemäß bevorzugt weisen mindestens 90 % aller von Mikroballons gebildeten Hohlräume einen maximalen Durchmesser von 10 bis 200 µm, stärker bevorzugt von 15 bis 200 µm, auf. Unter dem "maximalen Durchmesser" wird die maximale Ausdehnung eines Mikroballons in beliebiger Raumrichtung verstanden.

Die Bestimmung der Durchmesser erfolgt anhand einer Kryobruchkante im Rasterelektronenmikroskop (REM) bei 500-facher Vergrößerung. Von jedem einzelnen Mikroballon wird grafisch der Durchmesser ermittelt.

Wird mittels Mikroballons geschäumt, dann können die Mikroballons als Batch, Paste oder als unverschnittenes oder verschnittenes Pulver der Formulierung zugeführt werden. Des Weiteren können sie in Lösungsmittel suspendiert vorliegen.

Der Anteil der Mikroballons in der Haftklebemasse liegt gemäß einer bevorzugten Ausführungsform der Erfindung zwischen größer 0 Gew. % und bis zu 3,0 Gew.-%, insbesondere zwischen 0,2 Gew.-% und 2,0 Gew.-%, ganz besonders zwischen 0,4 und 1,5 Gew.-% jeweils bezogen auf die Gesamtzusammensetzung der Haftklebemasse. Die Angabe bezieht sich auf unexpandierte Mikroballons.

Eine erfindungsgemäße, expandierbare Mikrohohlkugeln enthaltende Haftklebemasse darf zusätzlich auch nicht-expandierbare Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und - im Spektrum der in der Kunststoffverarbeitung möglichen Temperaturen - nicht-thermoplastischem Glas.

Geeignet für die erfindungsgemäße Haftklebemasse sind außerdem - unabhängig gewählt von anderen Additiven - Polymervollkugeln, Glashohlkugeln, Glasvollkugeln, keramische Hohlkugeln, keramische Vollkugeln und/oder Kohlenstoffvollkugeln ("Carbon Micro Balloons").

Die absolute Dichte einer geschäumten erfindungsgemäßen Haftklebemasse beträgt bevorzugt 500 bis 990 kg/m³, stärker bevorzugt 600 bis 970 kg/m³, insbesondere 700 bis 900 kg/m³. Die relative Dichte beschreibt das Verhältnis der Dichte der geschäumten erfindungsgemäßen Haftklebemasse zur Dichte der rezepturidentischen, ungeschäumten erfindungsgemäßen Haftklebemasse. Die relative Dichte einer erfindungsgemäßen Haftklebemasse beträgt vorzugsweise 0,50 bis 0,99, stärker bevorzugt 0,60 bis 0,97, insbesondere 0,70 bis 0,90.

### Vernetzung

Die erfindungsgemäße Haftklebemasse oder eine aus der erfindungsgemäßen Haftklebemasse geformte Schicht können zudem vernetzt, insbesondere chemisch oder strahlenchemisch vernetzt, sein.

Hierzu kann der Haftklebemasse entweder zumindest ein geeignetes Vernetzungssystem zugesetzt sein oder es erfolgt eine strahlenchemische Vernetzung insbesondere durch Bestrahlung mit Elektronenstrahlen.

Zur Verbesserung der kohäsiven Eigenschaften der Haftklebmasse kann diese mit etablierten Vulkanisationssystemen oder insbesondere durch die Zugabe von Peroxiden thermisch vernetzt werden.

Im Rahmen der vorliegenden Erfindung ist jedoch eine strahlenchemische Vernetzung mit energiereicher Strahlung, insbesondere eine Vernetzung durch Bestrahlung mit Elektronenstrahlen, bevorzugt.

Hierdurch werden besonders Eigenschaften wie die Kohäsion positiv beeinflusst. Gängigem Fachwissen entsprechend kann erwartet werden, dass gleichzeitig Klebkräfte tendenziell sinken. Es hat sich jedoch gezeigt, dass überraschenderweise erfindungsgemäße Haftklebemassen nach der Vernetzung, insbesondere strahlenchemischer Vernetzung, eine geringer ausgeprägte Reduktion der Klebkraft zeigen, als erwartet werden kann. Für geeignete Parameter für Elektronenstrahlvernetzung sei explizit auf die Lehre der DE 10 2018 226 679 A1 Bezug genommen.

Im Sinne dieser Erfindung wird eine Dosis von mindestens 20 kGy und höchstens 60 kGy bevorzugt. Die Beschleunigungsspannung richtet sich nach der Schichtdicke des zu vernetzenden Materials. Sie liegt im Rahmen der vorliegenden Erfindung vorteilhaft zwischen 1,8 kV und 2,4 kV pro 1 µm Schichtdicke.

Zu Unterstützung des Vernetzungsprozesses oder der Verbesserung der Vernetzungseffizienz können Vernetzungspromotoren wie zum Beispiel mehrfunktionelle Acrylate oder mehrfunktionelle Methacrylate eingesetzt werden. Bis zu 2 Gew.-% solcher Promotoren bezogen auf das Gesamtgewicht der Haftklebemasse sind vorteilhaft.

### Haftklebemasseschicht

Ein weiterer Aspekt der vorliegenden Erfindung ist die zu einer Schicht ausgeformte erfindungsgemäße Haftklebemasse und damit eine Haftklebemasseschicht der erfindungsgemäßen Haftklebemasse.

Insbesondere kann die erfindungsgemäße Haftklebemasse zu einer erfindungsgemäßen Haftklebemasseschicht ausgeformt und erst anschließend vernetzt, insbesondere mit Elektronenstrahlen vernetzt, werden.

Erfindungsgemäße Haftklebemasseschichten können daher vernetzt oder unvernetzt sein. Die Begriffe "Haftklebemasseschicht" und "Haftklebeschicht" werden vorliegend synonym verwendet.

### Selbstklebeband

Vorzugsweise wird die Haftklebemasse in einem Selbstklebeband verwendet.

Ein Gegenstand der Erfindung ist damit ein Selbstklebeband umfassend wenigstens eine erfindungsgemäße Haftklebemasse.

Als Selbstklebebänder im erfindungsgemäßen Sinne sollen dabei alle ein- oder beidseitig mit Haftklebmasse beschichteten flächigen oder bandförmigen Trägergebilde verstanden werden, also neben klassischen Bändern auch Etiketten, Abschnitte, Stanzlinge (gestanzte mit Haftklebemasse beschichtete flächige Trägergebilde), zweidimensional ausgedehnte Gebilde (zum Beispiel Folien) und dergleichen, auch Mehrschichtanordnungen.

Des Weiteren umfasst der Ausdruck "Selbstklebeband" auch so genannte "Transferklebebänder", das heißt ein Selbstklebeband ohne Träger. Bei einem Transferklebeband ist die Haftklebemasse vielmehr vor der Applikation zwischen flexiblen Linern aufgebracht, die mit einer Trennschicht versehen sind und/oder anti-adhäsive Eigenschaften aufweisen. Zur Applikation wird regelmäßig zunächst ein Liner entfernt, die Haftkebemasse appliziert und dann der zweite Liner entfernt. Statt mit zwei Linern kann auch mit einem doppelseitig trennenden Liner gearbeitet werden.

Das Selbstklebeband kann in festen Längen wie zum Beispiel als Meterware oder aber als Endlosware auf Rollen (archimedische Spirale) zur Verfügung gestellt werden.

Der Masseauftrag (Beschichtungsstärke) der Haftklebemasse liegt vorzugsweise zwischen 20 und 500 g/m², weiter vorzugsweise zwischen 30 und 250 g/m², ganz besonders vorzugsweise zwischen 40 und 150 g/m².

Die Schichtdicke der mindestens einen Schicht der erfindungsgemäßen Haftklebemasse liegt typischerweise und bevorzugt bei zumindest 20 µm und bis zu 500 µm, häufig bei zumindest 30 µm und bis zu 250 µm, oder sogar bei zumindest 40 µm und bis zu 150 µm.

Als Trägermaterialien für das Selbstklebeband werden die dem Fachmann geläufigen und üblichen Trägermaterialien wie Papier, Gewebe, Vlies oder Folien aus zum Beispiel Polyester wie Polyethylenterephthalat (PET), Polyethylen, Polypropylen, verstreckten Polypropylen, Polyvinylchlorid, verwendet. Ebenfalls eingesetzt werden können Trägermaterialien aus nachwachsenden Rohstoffen wie Papier, Gewebe aus zum Beispiel Baumwolle, Hanf, Jute, Brennesselfasern oder Folien aus zum Beispiel Polymilchsäure, Cellulose, modifizierter Stärke, Polyhydroxyalkanoat. Diese Aufzählung ist nicht abschließend zu verstehen, sondern im Rahmen der Erfindung ist auch die Verwendung anderer Folien möglich.

Besonders bevorzugt sind Folien aus PET.

Das Trägermaterial kann vorzugsweise ein- oder beidseitig mit der Haftklebemasse ausgerüstet sein.

Das Selbstklebeband wird dadurch gebildet, dass auf den Träger partiell oder vollflächig die Haftklebemasse aufgetragen wird. Die Beschichtung kann auch in Form eines oder mehrerer Streifen in Längsrichtung (Maschinenrichtung) erfolgen, gegebenenfalls in Querrichtung, sie ist insbesondere aber vollflächig. Weiterhin kann die Haftklebemasse rasterpunktförmig mittels Siebdruck, wobei die Klebstoffpünktchen auch unterschiedlich groß und/oder unterschiedlich verteilt sein können, durch Tiefdruck in Längs- und Querrichtung zusammenhängenden Stegen, durch Rasterdruck oder durch Flexodruck aufgebracht werden. Die Klebemasse kann in Kalottenform (hergestellt durch Siebdruck) vorliegen oder auch in einem anderen Muster wie Gitter, Streifen, Zickzacklinien. Ferner kann sie beispielsweise auch aufgesprüht sein, was ein mehr oder weniger unregelmäßiges Auftragsbild ergibt.

Vorteilhaft ist die Verwendung eines Haftvermittlers, einer so genannten Primerschicht, zwischen Träger und Haftklebmasse oder einer physikalischen Vorbehandlung der Trägeroberfläche zur Verbesserung der Haftung der Haftklebmasse auf dem Träger.

Als Primer sind die bekannten Dispersion- und Lösungsmittelsysteme verwendbar zum Beispiel auf Basis von Isopren- oder Butadien-haltigem Kautschuk, Acrylatkautschuk, Polyvinyl, Polyvinyliden und/oder Cyclokautschuk. Isocyanate oder Epoxyharze als Additive verbessern die Haftung und erhöhen zum Teil auch die Scherfestigkeit des Haftklebstoffes. Der Haftvermittler kann ebenfalls mittels einer Coextrusions-Schicht auf der einen Seite der Trägerfolie aufgebracht werden. Als physikalische Oberflächenbehandlungen eigenen sich zum Beispiel Beflammung, Corona oder Plasma oder Coextrusionsschichten.

Des Weiteren kann im Falle von einseitigen Selbstklebebändern das Trägermaterial rück- oder oberseitig, also der Haftklebemassenseite gegenüberliegend, einer antiadhäsiven physikalischen Behandlung oder Beschichtung unterzogen sein, insbesondere mit einem Trennmittel oder Release (gegebenenfalls mit anderen Polymeren abgemischt) ausgerüstet sein.

Beispiele sind Stearyl-Verbindungen (zum Beispiel Polyvinylstearylcarbamat, Stearylverbindungen von Übergangsmetallen wie Cr oder Zr, Harnstoffe aus Polyethylenimin und Stearylisocyanat oder Polysiloxane. Der Begriff Stearyl steht als Synonym für alle geraden oder verzweigten Alkyle oder Alkenyle mit einer Anzahl an C-Atomen von mindestens 10 wie zum Beispiel Octadecyl.

Geeignete Trennmittel umfassen weiterhin tensidische Releasesysteme auf Basis langkettiger Alkylgruppen wie Stearylsulfosuccinate oder Stearylsulfosuccinamate, aber auch Polymere, die ausgewählt sein können aus der Gruppe bestehend aus Polyvinylstearylcarbamaten wie zum Beispiel Escoat 20 von der Firma Mayzo, Polyethyleniminstearylcarbamiden, Chrom-Komplexen von C₁₄- bis C₂₈-Fettsäuren und Stearyl-Copolymeren, wie zum Beispiel in DE 28 45 541 A beschrieben. Ebenfalls geeignet sind Trennmittel auf Basis von Acrylpolymeren mit perfluorierten Alkylgruppen, Silikone zum Beispiel auf Basis von Poly(dimethyl-Siloxanen) oder Fluorsilikonverbindungen.

Weiter kann das Trägermaterial vor- beziehungsweise nachbehandelt werden. Gängige Vorbehandlungen sind Hydrophobieren, Coronavorbehandlungen wie N₂-Corona oder Plasmavorbehandlungen, geläufige Nachbehandlungen sind Kalandern, Tempern, Kaschieren, Stanzen und Eindecken.

Das Selbstklebeband kann ebenfalls mit einer handelsüblichen Trennfolie oder -papier, die üblicherweise aus einem Basismaterial aus Polyethylen, Polypropylen, Polyester oder Papier das ein- oder doppelseitig mit Polysiloxan beschichtet ist, laminiert sein.

### Herstellverfahren

Die Herstellung des erfindungsgemäßen Selbstklebebandes kann durch übliche, dem Fachmann bekannte Beschichtungsverfahren erfolgen. Hierbei kann die Haftklebmasse inklusive der Additive, gelöst in einem geeigneten Lösemittel, mittels beispielsweise Rasterwalzenauftrag, Kommarakelbeschichtung, Mehrwalzenbeschichtung oder in einem Druckverfahren auf eine Trägerfolie oder Trennfolie beschichtet und anschließend das Lösemittel in einem Trockenkanal oder -ofen entfernt werden. Alternativ kann die Beschichtung der Trägerfolie oder Trennfolie auch in einem lösemittelfreien Verfahren erfolgen. Hierzu wird der Acrylnitril-Butadien-Kautschuk in einem Extruder erwärmt und aufgeschmolzen. In dem Extruder können weitere Prozessschritte wie das Mischen mit dem/n Klebharz(en) und mit den beschriebenen Additiven, Filtration oder eine Entgasung erfolgen. Die Schmelze wird dann mittels eines Kalanders auf die Trägerfolie oder Trennfolie beschichtet.

Mögliche Verfahren, nach denen Acrylnitril-Butadien-Kautschuk basierende Haftklebemassen wie die erfindungsgemäße hergestellt werden, finden sich in der DE 198 06 609 A1 sowie in den Schutzrechten WO 94/11175 A1, WO 95/25774 A1, WO 97/07963 A1.

Vorzüglich geeignet sind zudem Herstellverfahren, bei dem im Wesentlichen und insbesondere vollständig auf die Verwendung von Lösemitteln verzichtet wird. Vorteilhaft wird entsprechend der WO 2019/101938 A1 vorgegangen.

Ein geeignetes Herstellverfahren startet mit der Herstellung der Formulierung der Haftklebemasse in Lösung, gefolgt von der Beschichtung, der Trocknung und gegebenenfalls der, insbesondere strahlenchemischen, Vernetzung und gegebenenfalls anschließend der Schäumung.

Ein weiteres geeignetes Herstellverfahren startet mit der Herstellung der Formulierung der Haftklebemasse in Lösung, gefolgt von der Beschichtung, der Trocknung und gegebenenfalls der Schäumung und gegebenenfalls anschließend der, insbesondere strahlenchemischen, Vernetzung.

Ein weiteres geeignetes Herstellverfahren startet mit der Herstellung der Formulierung der Haftklebemasse lösemittelfrei in einem Extruder, gefolgt von der Beschichtung und gegebenenfalls der Schäumung und gegebenenfalls anschließend der, insbesondere strahlenchemischen, Vernetzung.

Ein weiteres geeignetes Herstellverfahren startet mit der Herstellung der Formulierung der Haftklebemasse lösemittelfrei in einem Extruder, gefolgt von der Beschichtung und gegebenenfalls der, insbesondere strahlenchemischen Vernetzung, und gegebenenfalls anschließend der Schäumung.

### Verwendung

Ein weiterer Gegenstand der vorliegenden Erfindung ist die Verwendung der erfindungsgemäßen Haftklebemasse oder des erfindungsgemäßen Selbstklebebandes zur Verklebung in und von elektronischen, optischen oder feinmechanischen Geräten sowie Etiketten oder Labels, insbesondere zur Verklebung in Mobilgeräten.

Elektronische, optische und feinmechanische Geräte im Sinne dieser Anmeldung sind insbesondere
- Wissenschaftliche, Schifffahrts-, Vermessungs-, fotografische, Film-, optische, Wäge-, Mess-, Signal-, Kontroll-, Rettungs- und Unterrichtsapparate und - Instrumente;
- Apparate und Instrumente zum Leiten, Schalten, Umwandeln, Speichern, Regeln und Kontrollieren von Elektrizität;
- Bildaufzeichnungs-, -verarbeitungs-, -übertragungs- und -wiedergabegeräte, wie beispielweise Fernseher und dergleichen
- Akustische Aufzeichnungs-, Verarbeitungs-, -übertragungs- und - wiedergabegeräte, wie beispielsweise Rundfunkgeräte und dergleichen
- Computer, Rechengeräte und Datenverarbeitungsgeräte, mathematische Geräte und Instrumente, Computerzubehör, Bürogeräte - wie beispielsweise Drucker, Faxgeräte, Kopiergeräte, Schreibmaschinen -, Datenspeichergeräte
- Fernkommunikations- und Multifunktionsgeräte mit Fernkommunikationsfunktion, wie beispielweise Telefone, Anrufbeantworter
- Chemische und physikalische Messgeräte, Steuergeräte und Instrumente, wie beispielweise Akkumulatorladegeräte, Multimeter, Lampen, Tachometer
- Nautische Geräte und Instrumente
- Optische Geräte und Instrumente
- Medizinische Geräte und Instrumente und solche für Sportler
- Uhren und Chronometer
- Solarzellenmodule, wie etwa elektrochemische Farbstoff-Solarzellen, organische
- Solarzellen, Dünnschichtzellen,
- Feuerlöschgeräte.

Die technische Entwicklung richtet sich vermehrt auf solche Geräte, die immer kleiner und leichter gestaltet werden, damit sie von ihrem Besitzer jederzeit mitgeführt werden können und üblicherweise regelmäßig mitgeführt werden. Dies geschieht üblicherweise durch Realisierung geringer Gewichte und/oder geeigneter Größe derartiger Geräte. Solche Geräte werden im Rahmen dieser Schrift auch als Mobilgeräte oder portable Geräte bezeichnet. Bei diesem Entwicklungstrend werden feinmechanische und optische Geräte zunehmend (auch) mit elektronischen Komponenten versehen, was die Möglichkeiten der Minimierung erhöht. Aufgrund des Mitführens der Mobilgeräte sind diese vermehrten - insbesondere mechanischen und chemischen - Belastungen ausgesetzt, etwa durch Anstoßen an Kanten, durch Fallenlassen, durch Kontakt mit anderen harten Objekten in der Tasche, aber auch schon durch die permanente Bewegung durch das Mitführen an sich. Mobilgeräte sind aber auch stärker Belastungen aufgrund von Feuchtigkeitseinwirkungen, Temperatureinflüssen und dergleichen ausgesetzt als solche "immobilen" Geräte, die üblicherweise in Innenräumen installiert sind und nicht oder kaum bewegt werden.

Die Erfindung bezieht sich dementsprechend besonders bevorzugt auf Mobilgeräte, da die erfindungsgemäß eingesetzte Klebemasse hier aufgrund ihrer unerwartet guten Eigenschaften einen besonderen Nutzen hat. Nachfolgend sind einige portable Geräte aufgeführt, ohne sich durch die konkret genannten Vertreter in dieser Liste bezüglich des Gegenstands der Erfindung unnötig beschränken zu wollen.
- Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems,
- Computer-Zubehörgeräte und Bedieneinheiten für elektronische Geräte, wie Mäuse,
- Zeichenpads, Grafiktabletts, Mikrophone, Lautsprecher, Spielkonsolen, Gamepads,
- Fernsteuerungen, Fernbedienungen, Tastfelder ("Touchpads")
- Monitore, Displays, Bildschirme, berührungsempfindliche Bildschirme (Sensorbildschirme,"Touchscreen-Geräte"), Beamer
- Lesegeräte für elektronische Bücher ("E-Books"),
- Kleinfernsehgeräte, Taschenfernseher, Filmabspielgeräte, Videoabspielgeräte Radios (auch Klein- und Taschenrundfunkgeräte), Walkmen, Discmen, Musikabspielgeräte für zum Beispiel CD, DVD, Bluray, Kassetten, USB, MP3, Kopfhörer Schnurlose Telefone, Mobiltelefone, Smartphones, Funksprechgeräte, Freisprechgeräte, Personenrufgeräte (Pager, Pieper)
- Mobile Defibrillatoren, Blutzuckermessgeräte, Blutdruckmessgeräte, Schrittzähler, Pulsmesser
- Taschenlampen, Laserpointer
- Mobile Detektoren, optische Vergrößerungsgeräte, Fernsichtgeräte, Nachtsichtgeräte, GPS-Geräte, Navigationsgeräte, tragbare Schnittstellengeräte der Satellitenkommunikation
- Datenspeichergeräte (USB-Sticks, externe Festplatten, Speicherkarten)
- Armbanduhren, Digitaluhren, Taschenuhren, Kettenuhren, Stoppuhren.

Ein weiterer Bereich, in dem die chemikalienbeständige Verklebung von Bedeutung ist, ist die Verklebung von Etiketten oder Labels zum Beispiel in Umgebungen, in denen der Kontakt mit Chemikalien möglich ist, wie zum Beispiel dem Motorraum, oder dort wo eine Manipulationssicherheit des Etiketts auch bei Anwendungen von verschiedenen Chemikalien gewährleistet sein muss.

Weitere Einzelheiten, Ziele, Merkmale und Vorteile der vorliegenden Erfindung werden nachfolgend anhand mehrerer, bevorzugte Ausführungsbeispiele darstellende Figuren näher erläutert. Es zeigen
- Figur 1: ein einseitiges Selbstklebeband,
- Figur 2: ein beidseitiges Selbstklebeband,
- Figur 3: ein trägerfreies Selbstklebeband (Transferklebeband).

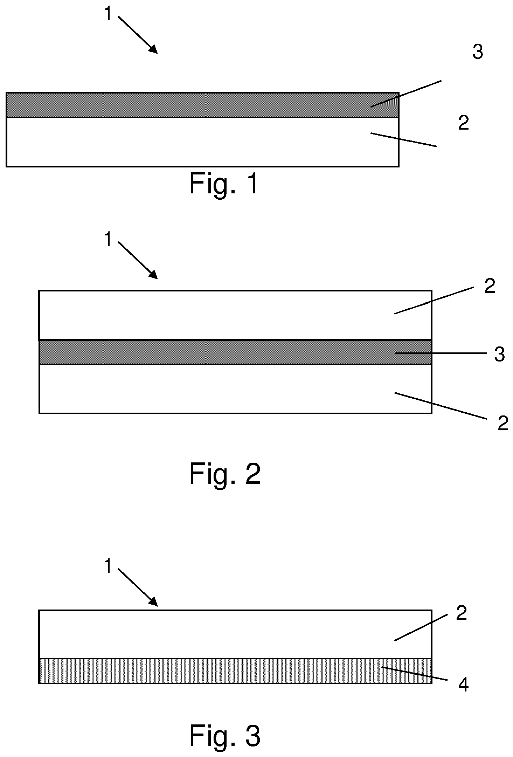

Figur 1 zeigt ein einseitig klebendes Selbstklebeband 1. Das Selbstklebeband 1 weist eine Haftklebeschicht 2 auf, die durch Beschichtung einer der zuvor beschriebenen Haftklebemasse auf einen Träger 3 hergestellt wurde. Der Haftklebemassenauftrag beträgt bevorzugt zwischen 20 und 250 g/m².

Zusätzlich (nicht gezeigt) kann noch eine insbesondere silikonisierte Trennfolie vorgesehen sein, die die Haftklebeschicht 2 vor der Verwendung des Selbstklebebandes 1 abdeckt und schützt. Die Trennfolie wird dann vor der Verwendung von der Haftklebeschicht 2 entfernt.

Der in Figur 2 dargestellte Produktaufbau zeigt ein Selbstklebeband 1 mit einem Träger 3, der beidseitig mit einer Haftklebemasse beschichtet ist und somit zwei Haftklebeschichten 2 aufweist. Der Haftklebemassenauftrag je Seite beträgt wiederum bevorzugt zwischen 20 und 250 g/m².

Auch bei dieser Ausgestaltung wird bevorzugt zumindest eine Haftklebeschicht 2 mit einer insbesondere silikonisierten Trennfolie abgedeckt. Bei einem aufgerollten Selbstklebeband kann diese eine insbesondere silikonisierte Trennfolie gegebenenfalls auch die zweite Haftklebeschicht 2 abdecken. Es können aber auch mehrere insbesondere silikonisierte Trennfolien vorgesehen sein.

Des Weiteren ist es möglich, dass die Trägerfolie mit einer oder mehreren Beschichtungen versehen ist. Weiterhin kann auch nur eine Seite des Selbstklebebandes mit der erfinderischen Haftklebemasse ausgestattet sein und auf der anderen Seite eine andere Haftklebemasse eingesetzt werden.

Der in Figur 3 dargestellte Produktaufbau zeigt ein Selbstklebeband 1 in Form eines Transferklebebandes, das heißt, ein trägerfreies Selbstklebeband 1. Hierzu wird die Haftklebemasse einseitig auf eine insbesondere silikonisierten Trennfolie 4 beschichtet und bildet so eine Haftklebeschicht 2 aus. Der Haftklebemassenauftrag beträgt hier üblicherweise zwischen 20 und 500 g/m². Gegebenenfalls wird diese Haftklebeschicht 2 noch auf ihrer zweiten Seite mit einer weiteren insbesondere silikonisierten Trennfolie abgedeckt. Zur Verwendung des Selbstklebebandes werden dann die insbesondere silikonisierte Trennfolien entfernt.

Als Alternative zu insbesondere silikonisierten Trennfolien können beispielsweise auch insbesondere silikonisierte Trennpapiere oder dergleichen eingesetzt werden. In diesem Fall sollte die Oberflächenrauigkeit des insbesondere silikonisierten Trennpapiers aber reduziert sein, um eine möglichst glatte Haftklebemassenseite zu realisieren.

### Testmethoden

Die Messungen werden - soweit nicht ausdrücklich anders erwähnt - bei einem Prüfklima von 23 ± 1 °C und 50 ± 5 % relativer Luftfeuchte durchgeführt.

### Test I - Molmasse (GPC)

### (a) Molmassenverteilung von Nitrilkautschuken

Molmassenverteilungen werden mittels Gelpermeationschromatographie (GPC) bestimmt. Als Eluent wird THF eingesetzt. Die Messung erfolgt bei 23 °C. Als Vorsäule wird PSS-SDV, 5 µ, 10³ Å, ID 8,0 mm x 50 mm verwendet. Zur Auftrennung werden die Säulen PSS-SDV, 5 µ, 10³ Å sowie 10⁴ Å und 10⁶ Å mit jeweils ID 8,0 mm x 300 mm eingesetzt. Die Probenkonzentration beträgt 4 g/l, die Durchflussmenge 1,0 ml pro Minute. Die Kalibrierung wird mittels des kommerziell verfügbaren ReadyCal-Kit Poly(styrene) high der Firma PSS Polymer Standard Service GmbH, Mainz, durchgeführt. (µ = µm; 1 Å = 10⁻¹⁰ m). Für die Molmassenverteilung werden u. a. das Zahlenmittel Mn und das Gewichtsmittel Mw erhalten, aus denen sich der Dispersitätsindex Mw/Mn berechnen lässt.

### (b) gewichtsmittlere Molmasse insbesondere von Weichmachern, Klebharzen

Das gewichtsmittlere Molekulargewicht Mw wird mittels Gelpermeationschromatographie (GPC) bestimmt. Als Eluent wird THF eingesetzt. Die Messung erfolgt bei 23 °C. Als Vorsäule wird PSS-SDV, 5 µ, 10³ Å, ID 8,0 mm x 50 mm verwendet. Zur Auftrennung werden die Säulen PSS-SDV, 5 µ, 10³ Å sowie 10⁴ Å und 10⁶ Å mit jeweils ID 8,0 mm x 300 mm eingesetzt. Die Probenkonzentration beträgt 4 g/l, die Durchflussmenge 1,0 ml pro Minute. Die Kalibrierung wird mittels des kommerziell verfügbaren ReadyCal-Kit Poly(styrene) high der Firma PSS Polymer Standard Service GmbH, Mainz, durchgeführt.

### Test II - Klebkraft Stahl

Die Bestimmung der Klebkraft (gemäß AFERA 5001) wird wie folgt durchgeführt. Als definierter Haftgrund wird eine polierte Stahlplatte mit einer Stärke von 2 mm eingesetzt. Das zu untersuchende verklebbare Flächenelement (50 g/m² Haftklebeschicht als 36 µm geätzter Polyester-Folie) wird, falls nicht anderweitig angegeben, auf eine Breite von 20 mm und eine Länge von etwa 25 cm zugeschnitten, mit einem Handhabungsabschnitt versehen und unmittelbar danach fünfmal mit einer Stahlrolle von 4 kg bei einem Vorschub von 10 m/min auf den jeweils gewählten Haftgrund aufgedrückt. Unmittelbar im Anschluss daran wird das verklebbare Flächenelement in einem Winkel von 180° vom Haftgrund mit einem Zugprüfungsgerät (Firma Zwick) mit einer Geschwindigkeit v = 300 mm/min abgezogen und die hierfür bei Raumtemperatur benötigte Kraft gemessen. Der Messwert (in N/cm) ergibt sich als Mittelwert aus drei Einzelmessungen.

Zur Bestimmung der **chemischen Beständigkeit** (Resistenz) wurden Selbstklebebandmuster bei 65 °C und 90 % rel. Luftfeuchtigkeit in einer 75:25 (vol.-%) Mischung von iso-Propanol und Wasser gelagert. Für die Lagerung in iso-Propanol/Wasser wurde ein verschließbares Gefäß verwendet, um einen Verdampfungsverlust von iso-Propanol zu verhindern. Nach der Lagerung werden die Muster zunächst mit destilliertem Wasser abgespült und anschließend für 24 Stunden bei 23 °C und 50 % rel. Luftfeuchtigkeit gelagert. Erst dann erfolgte wie oben beschrieben die Messung der Klebkraft.

### Test III - Dynamische Scherfestigkeit

Ein Abschnitt eines Transferklebebandmusters im Format 25 mm x 25 mm wurde zwischen zwei Stahlplatten (Edelstahl poliert, 2 mm Dicke) verklebt. Für eine reproduzierbare Verbundherstellung wurde ein Andruck von 652 N für 60 s realisiert. Nach einer Lagerung von 72 h bei 23 °C und 50 % rel. Feuchte wird der Verbund in einer Zugprüfmaschine (Fa. Zwick) mit 50 mm/min bei 23 °C und 50% rel. Feuchte so getrennt, dass die beiden Stahlplatten unter einem Winkel von 180° auseinandergezogen wurden, und die Maximalkraft in N/cm² ermittelt. Das Ergebnis ist der Mittelwert aus drei Einzelmessungen.

### Test IV - Klebharzerweichungstemperatur

Für Einzelsubstanzen: Die (Kleb)Harzerweichungstemperatur (Erweichungspunkt; Erw.-Punkt) wird nach der einschlägigen Methodik durchgeführt, die als Ring & Ball bekannt ist und nach ASTM E28 standardisiert ist.

### Test V - DACP

In ein trockenes Probenglas werden 5,0 g Testsubstanz (das zu untersuchende Klebharzmuster) eingewogen und mit 5,0 g Xylol (Isomerengemisch, CAS [1330-20-7], ≥ 98,5 %, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99 %, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Firma Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

### Test VI - MMAP

In ein trockenes Probenglas werden 5,0 g Testsubstanz (das zu untersuchende Klebharzmuster) eingewogen und mit 10 mL trockenem Anilin (CAS [62-53-3], ≥ 99,5 %, Sigma-Aldrich #51788 oder vergleichbar) und 5 mL trockenem Methylcyclohexan (CAS [108-87-2], ≥ 99 %, Sigma-Aldrich #300306 oder vergleichbar) versetzt. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Firma Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der MMAP-Wert desto höher ist die Aromatizität der Testsubstanz.

Im Folgenden soll die Erfindung anhand weiterer Beispiele näher erläutert werden, ohne damit die Erfindung unnötig einschränken zu wollen.

### Herstellung der Haftklebmassen

Alle für die Zielformulierung erforderlichen Bestandteile wurden in ein Musterglas eingewogen und mit Lösungsmittel versetzt. Hierzu wurde 2-Butanon verwendet in einem Mengenverhältnis zu den übrigen Bestandteilen, dass ein Feststoffgehalt (alle für die Zielformulierung erforderlichen Bestandteile) von 25 Gew.-% resultierte. Die Mischungen wurden bei Raumtemperatur für 48 h auf einer Rollbank belassen.

### Herstellung der Prüfmuster

Die Haftklebmasselösung wurde auf einem handelsüblichen Laborstreichtisch (zum Beispiel von der Firma SMO (Sondermaschinen Oschersleben GmbH)) mit Hilfe eines Streichmessers auf einen silikonisierten Polyesterliner beschichtet. Das Butanon wurde bei 105 °C im Umlufttrockenschrank für 10 Minuten abgedampft. Die Spaltbreite beim Beschichten wurde so eingestellt, dass nach dem Abdampfen des Lösemittels ein Masseauftrag von 50 g/m² erreicht wurde. Anschließend wurden die vom Lösemittel befreiten Filme mit einer weiteren Lage einer silikonisierter PET-Folie abgedeckt und bis zur weiteren Ausprüfung bei 23 °C und 50 % rel. Luftfeuchtigkeit gelagert.

Mit Mikroballon versetzte Haftklebemassen wurden in gleicher Weise beschichtet. Die Schäumung erfolgte zwischen den beiden Linern bei 172 °C für 30 s.

Einige Beschichtungsmuster wurden zusätzlich mittels Elektronenstrahlen vernetzt. Die Bestrahlung erfolgte dabei im Verbund Polyesterliner-Haftklebeschicht-Polyesterliner. Es wurde mit einer Beschleunigungsspannung von 30 kV gearbeitet und eine Dosis von 30 kGy genutzt. Es wurde einseitig bestrahlt.

Für Klebkraftexperimente und die Lagerung in iso-Propanol/Wasser zur Bestimmung der chemischen Resistenz wurden Beschichtungsmuster der 50 g/m² Haftklebemasseschicht auf eine 36 µm geätzte Polyesterfolie laminiert.

### I. Verwendete Rohmaterialien

**Tabelle 2: verwendete Chemikalien**

| **Komponente** | **Chemikalie** | **Beschreibung** | **Hersteller** |
|---|---|---|---|
| Elastomerkomponente (a) | Nipol^{®} 401 L | NBR; | Zeon Chemicals |
| | | Acrylnitril-Anteil: 18 Gew.-%; | |
| | | Mooney ML(1+4) 100 °C: 65 M.U. | |
| | Perbunan^{®} 2846 | NBR; | Arlanxeo |
| | | Acrylnitril-Anteil: 28,6 Gew.-%; | |
| | | Mooney ML(1+4) 100 °C: 42 M.U. | |
| | Nipol N917 | NBR; | Zeon Chemicals |
| | | Acrylnitril-Anteil: 23 Gew.-%; | |
| | | Mooney ML(1+4) 100 °C: 62 M.U. | |
| Klebharz-komponente (b) | Novares^{®} TK100 | Aliphatisch modifiziertes aromatisches C9-Kohlenwasserstoffharz; | RainCarbon |
| | | Erw.-Punkt: 100 °C | |
| | | MMAP: 5 °C | |
| | | DACP: < -40 °C | |
| | Picco AR100 | Modifiziertes aromatisches Kohlenwasserstoffharz | Synthomer |
| | | Erw.-Punkt: 101 °C | |
| | | MMAP: 7 °C | |
| | | DACP: < -40 °C | |
| Weichmacherkomponente (c) | Nipol 1312LV | Flüssiger Nitrilkautschuk Acrylnitril-Anteil 26 Gew.-% Viskosität (bei 50 °C) 12,5 Pa s | Zeon Chemicals |
| Füllstoffkomponente (d) | EPU 40 | Polymer Beads bestehend aus vernetztem HDI/ Trimethylol Hexyllacton Polymer und Polymethyl-methacrylat Partikelgröße 7 µm | Sunjin Beauty Science |
| Schäumungsmittel | Expancel^{®} 920 DU 20 | Mikroballons | Nouryon |

**Tabelle 3, Festeinwaage [%] bedeutet jeweils [Gew.-%].**

| | | Beispiel E1 | Beispiel E2 | Beispiel E3 |
|---|---|---|---|---|
| (a) Elastomerkomponente | Nipol DN401L | 25,0 % | 24,0 % | 23,0 % |
| | Perbunan 2846 | 25,0 % | 24,0 % | 23,0 % |
| Elastomer-Anteil | | 50,0 % | 48,0 % | 46,0 % |
| (b) Klebharz-komponente | Novares TK100 | 50,0 % | 47,0 % | 50,0 % |
| (d) Füllstoffkomponente | EPU 40 | | 5,0 % | 3,5 % |
| Schäumung | Expancel 920DU20 | | | 0,5 % |
| Klebkraft 180° (Stahl, unvernetzt) | | 12,0 N/cm | 11,0 N/cm | 11,0 N/cm |
| Klebkraft 180° (Stahl, vernetzt) | | 12,0 N/cm | 12,0 N/cm | 11,0 N/cm |
| Dyn. Scherfestigkeit (vernetzt) | | 89 N/cm² | 78 N/cm² | 119 N/cm² |
| Chem. Resistenz (unvernetzt) | | 6,4 N/cm | 5,0 N/cm | 5,9 N/cm |
| Chem. Resistenz (vernetzt) | | 9,0 N/cm | 7,0 N/cm | 7,0 N/cm |

**Tabelle 4**

| | | Beispiel V1 |
|---|---|---|
| (a) NitrilkautschucKomponente | Nipol N917 | 65,0 % |
| (b) Klebharz-Komponente | Picco AR100 | 30,0 % |
| (c) Weichmacherkomponente | Nipol 1312LV | 5,0% |
| Klebkraft 180° (Stahl, unvernetzt) | | 7,0 N/cm |
| Klebkraft 180° (Stahl, vernetzt) | | 4,0 N/cm |
| Dyn. Scher-festigkeit (vernetzt) | | 38 N/cm² |
| Chem. Resistenz (unvernetzt) | | 7,0 N/cm |
| Chem. Resistenz (vernetzt) | | 5,0 N/cm |

Festeinwaage [%] bedeutet jeweils [Gew.-%].

Ferner wurde das Beispiel 4) der WO2007012656 A1 nachgestellt. Dies führt jedoch nicht zu einem haftklebrigen Klebeband. Die Klebkraft bei Raumtemperatur beträgt weniger als 0,5 N/cm. Dynamische Scherfestigkeiten lassen sich somit nicht bestimmen.

Wie anhand der Tabellen erkennbar ist, wird mit den erfindungsgemäßen Haftklebemassen überraschenderweise ein verbessertes Eigenschaftsprofil umfassend Klebkräfte und dynamische Scherfestigkeiten erzielt. Die erfindungsgemäßen Haftklebemassen liegen somit auf einem verbesserten Niveau im Zielkonflikt aus Adhäsion und Kohäsion.

Gleichzeitig weisen die erfindungsgemäßen Beispiele weiterhin eine gute chemische Resistenz auf, wie anhand der Klebkräfte nach Lagerung in iso-Propanol/Wasser erkennbar ist.

### Bezugszeichenliste

- 1: Selbstklebeband
- 2: Haftklebeschicht
- 3: Träger
- 4: Trennfolie

## Patentansprüche

1. Haftklebemasse enthaltend
(a) eine Nitrilkautschukkomponente; und
(b) eine Klebharzkomponente,
wobei die Nitrilkautschukkomponente (a) zumindest einen ersten Nitrilkautschuk N1 mit einem Acrylnitril-Gehalt von mindestens 14 Gew.-% und höchstens 22 Gew.-% und zumindest einen zweiten Nitrilkautschuk N2 mit einem Acrylnitril-Gehalt von mindestens 25 Gew.-% und höchstens 32 Gew.-% enthält, und der Anteil an Nitrilkautschuken N1 und N2 bezogen auf die Nitrilkautschukkomponente (a) mindestens 90 Gew.-%, beträgt; und die Klebharzkomponente (b) zumindest ein Klebharz mit aromatischen Strukturelementen mit einem MMAP von höchstens 40 °C (nach Test VI) und einem Erweichungspunkt (nach Test IV) von mindestens 85 °C und höchstens 135 °C enthält.

2. Haftklebemasse nach Anspruch 1, **dadurch gekennzeichnet, dass** sie, bezogen auf das Gesamtgewicht der Haftklebemasse, mindestens 38,0 Gew.-% und höchstens 60,0 Gew.-%, bevorzugt mindestens 42,0 Gew.-% und höchstens 55,0 Gew.-% der Nitrilkautschukkomponente (a) enthält.

3. Haftklebemasse nach einem der vorherigen Ansprüche, **dadurch gekennzeichnet, dass** der Anteil an Nitrilkautschuken N1 und N2 bezogen auf die Nitrilkautschukkomponente (a) mindestens 95 Gew.-%, bevorzugt 100 Gew.-%, beträgt.

4. Haftklebemasse nach einem der vorherigen Ansprüche, **dadurch gekennzeichnet, dass** ein jeder Nitrilkautschuk N1 einen Acrylnitril-Gehalt von 16 bis 21 Gew.-%, aufweist und/oder ein jeder Nitrilkautschuk N2 einen Acrylnitril-Gehalt von 26 Gew.-% bis 30 Gew.-% aufweist.

5. Haftklebemasse nach einem der vorherigen Ansprüche, **dadurch gekennzeichnet, dass** ein jeder Nitrilkautschuk N1 eine Mooney-Viskosität (ML(1+4) 100 °C) von 45 bis 80 MU und/oder ein jeder Nitrilkautschuk N2 eine Mooney-Viskosität (ML(1+4) 100 °C) von 35 bis 65 MU aufweist.

6. Haftklebemasse nach einem der vorherigen Ansprüche, **dadurch gekennzeichnet, dass** sie, bezogen auf das Gesamtgewicht der Haftklebemasse, 40,0 Gew.-% bis 62,0 Gew.-%, vorzugsweise 40,0 Gew.-% bis 55,0 Gew.-%, der Klebharzkomponente (b) enthält.

7. Haftklebemasse nach einem der vorherigen Ansprüche, **dadurch gekennzeichnet, dass** das zumindest eine Klebharz der Klebharzkomponente (b) ausgewählt ist aus der Gruppe bestehend aus Klebharzen mit aromatischen Strukturelementen insbesondere auf Basis von C₉-Monomerströmen, und Polymerisaten reiner C₈- oder C₉-Aromaten, aliphatisch modifizierten aromatischen Kohlenwasserstoffharzen, sogenannten C9/C5-Harzen.

8. Haftklebemasse nach einem der vorherigen Ansprüche, **dadurch gekennzeichnet, dass** sie geschäumt ist.

9. Haftklebemasse nach einem der vorherigen Ansprüche, **dadurch gekennzeichnet, dass** sie einen oder mehrere Füllstoffe enthält.

10. Haftklebemasse nach einem der vorherigen Ansprüche, **dadurch gekennzeichnet, dass** sie vernetzt ist, wobei die Vernetzung bevorzugt mittels Bestrahlung mit Elektronenstrahlung mit einer bevorzugten Dosis von mindestens 20 kGy und höchstens 60 kGy erfolgt und die Beschleunigungsspannung bevorzugt zwischen 1,8 kV und 2,4 kV pro 1 µm Schichtdicke liegt.

11. Selbstklebeband umfassend wenigstens eine Haftklebemasse nach einem der Ansprüche 1 bis 10.

12. Verwendung der Haftklebemasse nach einem der Ansprüche 1 bis 10 oder des Selbstklebebandes nach Anspruch 11 zur Verklebung in und von elektronischen, optischen oder feinmechanischen Geräten sowie Etiketten oder Labels, insbesondere zur Verklebung in Mobilgeräten.
